# EUROPEAN PATENT SPECIFICATION

(11) **EP 4 330 207 B1**
(45) Date of publication and mention of the grant of the patent: **14.05.2025**
(21) Application number: 22735393.5
(22) Date of filing: 21.06.2022
(51) Int. Cl.: C04B 28/04, C04B 28/06, C04B 40/00, C04B 24/22, C04B 103/30

(54) **CEMENT DISPERSANT COMPRISING A NAPHTHALENESULFONIC ACID POLYCONDENSATE AND AT LEAST ONE OF A PHOSPHORYLATED POLYCONDENSATE AND A POLYCARBOXYLATE ETHER, AND CONSTRUCTION COMPOSITION**
ZEMENTDISPERGIERMITTEL MIT EINEM NAPHTHALINSULFONSÄUREPOLYKONDENSAT UND MINDESTENS EINEM VON EINEM PHOSPHORYLIERTEN POLYKONDENSAT UND VON EINEM POLYCARBOXYLATETHER SOWIE KONSTRUKTIONSZUSAMMENSETZUNG
DISPERSANT POUR CIMENT COMPRENANT UN POLYCONDENSAT D'ACIDE NAPHTALÈNESULFONIQUE ET AU MOINS L'UN D'UN POLYCONDENSAT PHOSPHORYLÉ ET D'UN ÉTHER DE POLYCARBOXYLATE ET COMPOSITION DE CONSTRUCTION

(30) Priority: 22.06.2021 EP 21180836
(43) Date of publication of application: 06.03.2024
(73) Proprietor: Construction Research & Technology GmbH, 83308 Trostberg (DE)
(72) Inventor: AYKAN, Gulnihal, Dubai (AE); SCHMIDT, Michael, Dubai (AE); GOWDA, Sridhara, Dubai (AE); BANDIERA, Massimo, 83308 Trostberg (DE)
(74) Representative: Lorenz, Klaus Uwe
(86) International application number: PCT/EP2022/066819
(87) International publication number: WO 2022/268772

(56) References cited:
- EP-B1- 2 473 457
- JP-A- H06 340 459

## Description

The present invention relates to a cement dispersant comprising a naphthalenesulfonic acid polycondensate and at least one of a phosphorylated polycondensate and a polycarboxylate ether. The invention further relates to a construction composition comprising a cementitious binder and said cement dispersant.

It is known that dispersants are added to aqueous slurries of hydraulic binders for improving their workability, i.e. spreadability, pumpability or flowability. Such admixtures are capable of preventing the formation of solid agglomerates and of dispersing the particles already present and those newly formed by hydration and in this way improving the workability. In order to convert the pulverulent binders into a freshly mixed processible form, substantially more mixing water is required than would be necessary for the subsequent hydration and hardening process. The voids formed in the concrete body by the excess of water, which subsequently evaporates, lead to poor mechanical strength and resistance. In order to reduce the excess proportion of water at a predetermined processing consistency and/or to improve the workability at a predetermined water/binder ratio, admixtures are used which are generally referred to as water-reducing agents or plasticizers. Those which allow high levels of water reduction are known as high range water reducers or superplasticizers.

Nowadays, superplasticizers can be categorized into four chemically distinctly different classes: polycondensates; polycarboxylates; small molecules and biopolymers.

Polycondensates represent a first type of superplasticizer. From this group, *β*-naphthalenesulfonate-formaldehyde (BNS) constitutes by far the most widely used type [Hattori K., Yamakawa C., Suzue S., Azuma T., Imamura T., Ejiri Y., "Flowing concrete", Review of General Meeting, Technical Session-Cement Association of Japan, V. 30, 1976, 153-154]. Main advantages of polycondensate-type superplasticizers include relatively simple preparation from commonly available raw materials, robust performance with cements of variable compositions and high tolerance to contaminants occasionally occurring in cement such as clay and silt.

In 1981, polycarboxylate comb polymers were introduced as a new class of superplasticizers. Their structural characteristic is an anionic polymer backbone which holds lateral graft chains. These side chains instigate a steric hindrance effect between the cement particles suspended in water. Through this unique mechanism, PCE superplasticizers exhibit superior dispersing force compared to polycondensates. Because of their highly tunable chemical and molecular structure, PCEs can accommodate many different purposes such as providing long slump retention, or effectiveness at ultra-low water-to-cement ratios.

In order to obtain a good balance between effectiveness and cost, mixtures of plasticizers are frequently used.

For example, EP 2473457 B1 describes a dispersant formulation containing a first component selected from a branched comb polymer having polyether side chains, a naphthalene sulfonate-formaldehyde condensate (BNS) and a melamine sulfonate-formaldehyde condensate (MSF), and a second component which is a polycondensation product of a (hetero)aromatic monomer having at least one polyether side chain, a phosphated (hetero)aromatic monomer and a (hetero)aromatic monomer.

WO 2016/081112 A2 describes a composition for use as a stable additive concentrate in cement admixture compositions comprising i) a nonionic or substantially nonionic vinyl or acrylic brush polymer having pendant or side chain polyether groups, ii) an aromatic cofactor containing one or more phenolic groups or, in combination, one or more aromatic groups with at least one sulfur acid group; and iii) a polycarboxylate ether copolymer water reducer containing carboxylic acid or salt groups and having polyether side chains .

In connection with mixtures of plasticizers, US20170107153A1 warns, however, of compatibility problems between plasticizers: "The use of *β*-naphthalene sulfonic acid condensates (BNS) however in a mixture with polyether side chain comprising dispersants (e.g. polycarboxylate ethers (PCE) and phosphorylated polycondensates) is less preferable, because incompatibility problems between the two types of dispersants can occur."

JPH06340459A describes a cement dispersant capable of eliminating transportation trouble by pumping because there is no slump loss over a long time. The cement dispersant is obtainable by a co-condensation procedure of formaldehyde, one or more aromatic compounds obtained by introducing 1 to 100 mol of oxyalkylene groups having 2 to 3 carbon atoms, and one or more materials co-condensable with formaldehyde. The co-condensation product comprises a sulfonate group or sulfomethyl group.

EP 0 780 348 A1 describes a cement dispersant comprising a polymer which is obtained by co-condensating monomers comprising monomer (A) and monomer (B) with formaldehyde, or a salt obtained by neutralizing the polymer. Monomer (A) is an aromatic compound having, on the average, 1 to 300 mol per molecule of at least one member selected from the group consisting of oxyethylene group and oxypropylene group, and monomer (B) is an aromatic compound having a carboxyl group.

It is an object of the present invention to provide a plasticizer admixture having a good dosage efficiency and a good balance between effectiveness and cost without compromising compressive strength, while avoiding compatibility issues and viscosity increase of the admixture.

Accordingly, the invention relates to a cement dispersant comprising component i) and at least one of components ii) and iii):
i) a naphthalenesulfonic acid polycondensate being obtainable by a condensation reaction of
   i-1) a naphthalenesulfonic acid,
   i-2) an alkoxylated hydroxyaryl compound having a polyoxyalkylene chain with 3 to 130 oxyalkylene units, and
   i-3) formaldehyde,
   in a weight ratio of i-1) : i-2) of 95 : 5 to 60 : 40, preferably 85 : 15 to 60 : 40, more preferably 75 : 25 to 60 : 40,
ii) a phosphorylated polycondensate being obtainable by a condensation reaction of
   ii-1)an aromatic compound having a phosphate moiety,
   ii-2)an alkoxylated hydroxyaryl compound having a polyoxyalkylene chain with 3 to 130 oxyalkylene units, and
   ii-3)formaldehyde,
   in a weight ratio of ii-1) : ii-2) of 2 : 98 to 40 : 60, preferably 5 : 95 to 30 : 70, more preferably 10 : 90 to 20 : 80,
iii) a polycarboxylate ether having a carbon-chain backbone with anionic and/or anionogenic groups and polyoxyalkylene side chains having an average of 3 to 130 oxyalkylene units.

The inventors have found that naphthalenesulfonic acid polycondensate i) provide benefits over the state of the art in terms of compatibility in formulations with PCEs and phosphorylated polycondensates. Regular BNS cannot be successfully formulated with PCEs in broad ranges of ratios because of viscosity problems and limited efficiency in dispersion. Thus, the problem underlying the invention has been solved.

In one embodiment according to the invention, the cement dispersant comprises a naphthalenesulfonic acid polycondensate i) and a phosphorylated polycondensate ii).

In another embodiment according to the invention, the cement dispersant comprises a naphthalenesulfonic acid polycondensate i) and a polycarboxylate ether iii).

Advantageously, the total amount of the mixture of components i), ii), and iii) may be in a similar range compared to regular BNS while comparable compressive strengths of the construction compositions are achieved.

The naphthalenesulfonic acid polycondensate i) used in accordance with the invention is obtainable by a condensation reaction of
i-1) a naphthalenesulfonic acid,
i-2) an alkoxylated hydroxyaryl compound having a polyoxyalkylene chain with 3 to 130 oxyalkylene units, and
i-3) formaldehyde.

The naphthalenesulfonic acid compound i-1) may be selected from naphthalene-1-sulfonic acid, naphthalene-2-sulfonic acid, and a mixture thereof. Naphthalene-2-sulfonic acid is preferred. The naphthalenesulfonic acid compound i-1) is an important intermediate in the manufacture of dyes and other chemicals. It is commercially available and is manufactured on an industrial scale by a sulfonation reaction of naphthalene with a suitable sulfonating agent such as sulfuric acid. The product of the sulfonation reaction may contain minor amounts of unreacted naphthalene which typically do not interfere with subsequent reactions and which therefore are not removed.

The alkoxylated hydroxyaryl compound i-2) is a hydroxyaryl compound having a polyoxyalkylene chain with 3 to 130, preferably 5 to 100, more preferably 8 to 80 oxyalkylene units.

Herein, the term "alkoxylated hydroxyaryl compound" denotes a compound having an aromatic core and at least one hydroxyl group directly attached to the aromatic core. The alkoxylated hydroxyaryl compound i-2) may have one or more further substituents as long as the presence of such substituents does not interfere with the condensation reaction of the alkoxylated hydroxyaryl compound i-2) and formaldehyde i-3). In an embodiment, the hydroxyaryl compound i-2) is selected from unsubstituted or monosubstituted phenols, and unsubstituted or monosubstituted naphthols. Suitably, the phenols and naphthols may be monosubstituted with a substituent selected from alkyl groups and carboxylic groups. Suitable naphthols are selected from 1-naphthol and 2-naphthol. Suitable alkyl-substituted phenols are selected from ortho-cresol, meta-cresol and para-cresol. Suitable carboxylic-substituted phenols are selected from gallic acid and salicylic acid.

Herein, the term "oxyalkylene units" refers to a repeating unit of general formula (A-1):

-[-R-O-]- (A-1)

wherein R denotes a linear or branched alkylene unit having at least 2 carbon atoms, preferably 2 to 4 carbon atoms. The polyoxyalkylene chain may comprise identical or different oxyalkylene units. Different oxyalkylene units may be arranged either in a random or a block-wise fashion. Preferably, the oxyalkylene unit is an oxyethylene group (-CH₂-CH₂-O-) and/or an oxypropylene group (-CH(CH₃)-CH₂-O- and/or -CH₂-CH(CH₃)-O-), preferably an oxyethylene group.

The alkoxylated hydroxyaryl compounds i-2) may be obtained by reaction of hydroxyaryl compounds with alkylene oxides such as ethylene oxide or propylene oxide. The alkylene oxides introduce one or more divalent oxyalkylene groups into the hydroxyaryl compounds, e.g. into the phenol molecule. Such alkylene oxide residue is then interposed between the hydroxyl group oxygen atom and its hydrogen atom.

Generally, such an alkoxylated compound may be a single compound. However, usually, it is a mixture of compounds in which the numbers of oxyalkylene groups in the compounds are present as a distribution. That is that the number of 3 to 130 oxyalkylene units per polyoxyalkylene chain represents an average value of oxyalkylene units per polyoxyalkylene chain.

In an embodiment, the polyoxyalkylene units comprise at least 60 mol-%, preferably at least 85 mol-%, more preferably at least 95 mol-% of oxyethylene units.

In an embodiment, the alkoxylated hydroxyaryl compound i-2) is an ethoxylated phenol. The term "ethoxylated phenol" denotes a hydroxyaryl compound that has been reacted with ethylene oxide to yield a polyoxyalkylene chain consisting of 100% oxyethylene units.

Suitably, such ethoxylated phenol is prepared by an ethoxylation reaction of phenol, or phenoxyethanol using ethylene oxide. Generally, such a phenoxyethanol precursor may be produced by a hydroxyethylation reaction of phenol using ethylene oxide, e.g. by a Williamson ether synthesis. Said phenoxyethanol precursor carries a hydroxyethyl moiety at the phenolic hydroxyl group oxygen atom at which a (poly)-oxyethylene chain may subsequently be attached.

The naphthalenesulfonic acid i-1) and the alkoxylated hydroxyaryl compound i-2) are reacted in a weight ratio of i-1) : i-2) of 95 : 5 to 60 : 40, preferably 85 : 15 to 60 : 40, more preferably 75 : 25 to 60 : 40.

For the preparation of the naphthalenesulfonic acid polycondensate i), the above-described naphthalenesulfonic acid i-1) and the alkoxylated hydroxyaryl compound i-2) are reacted with formaldehyde i-3). The naphthalenesulfonic acid i-1) may be prepared in situ by reacting naphthalene and sulfuric acid, and reacted with the alkoxylated hydroxyaryl compound i-2) and formaldehyde i-3). Suitably, the formaldehyde i-3) is added in form of paraformaldehyde or an aqueous formaldehyde solution, e.g. having a formaldehyde content of 25% to 37%. Formaldehyde i-3) is present in at least a stoichiometric amount, that is, formaldehyde i-3) is used in a molar amount equal to the sum of the molar amounts of the naphthalenesulfonic acid i-1) and the alkoxylated hydroxyaryl compound i-2). Formaldehyde i-3) may be used in excess of the stoichiometric amount.

The condensation reaction of the naphthalenesulfonic acid i-1), the alkoxylated hydroxyaryl compound i-2) and formaldehyde i-3) can be carried out according to processes known per se.

For carrying out the condensation process, the naphthalenesulfonic acid i-1) and the alkoxylated hydroxyaryl compound i-2), in predetermined amounts, are mixed with in water, preferably in a sealed pressure reactor such as an autoclave. As described above, alternatively, naphthalene and sulfuric acid are mixed together with the alkoxylated hydroxyaryl compound i-2), in predetermined amounts, and water. Suitably, the amount of water is adjusted in a way that the viscosity of the reaction mixture may be controlled such that the reaction mixture remains stirrable during the whole condensation process. When naphthalenesulfonic acid i-1) is prepared in situ, naphthalene is reacted with sulfuric acid, the mixture is cooled, and diluted with water. Then, the alkoxylated hydroxyaryl compound i-2) is added as described above. Generally, the condensation process is carried out under acidic conditions. In the event that the existing acidity of the naphthalenesulfonic acid i-1), or, in the event that the naphthalenesulfonic acid i-1) is prepared in situ, from the sulfuric acid, is not sufficient for carrying out the condensation process, an additional acid, e.g. sulfuric acid or the like, may be added to the reaction mixture in an amount such that the pH of the reaction mixture is in a range for successfully carrying out the condensation process. The resulting mixture is fed into a reaction vessel and stirred. For adding a predetermined amount of formaldehyde i-3) to the resulting mixture, the formaldehyde source and, optionally, water, are dropwise added to the mixture of i-1) and i-2) in water at a temperature of 100 to 110 ° C over a timespan of 2.5 to 3.5 h while stirring. After completion of the dropwise addition, the mixture is heated to a temperature of 110 to 120 ° C for 3 to 5 h while stirring. The polycondensation reaction is preferably carried out in a sealed pressure reactor such as an autoclave. Then, the reaction mixture is cooled to about 80 ° C, and excess amounts of a base, e.g. sodium hydroxide, are added. In the event that no solid precipitate is detected in the resulting reaction mixture, no further work-up is necessary. Otherwise, the reaction mixture is suitably filtered in order to remove the solid precipitates.

The resulting naphthalenesulfonic acid polycondensate i) obtained from the condensation process may be used in the cement dispersant of the invention as it is. However, from the viewpoint of the storage and use thereof, the neutralized salt of the above naphthalenesulfonic acid polycondensate i) may be preferred. Examples of the neutralized salt of the above polymer include monovalent metal salts such as alkaline metal salts, divalent metal salts such as alkaline earth metal salts, ammonium salt, amine salts and substituted amine salts such as alkylamine salts having 1 to 3 carbon atoms, monoethanolamine salt, diethanolamine salt and triethanolamine salt of the naphthalenesulfonic acid polycondensate i). As the neutralizing agent, it is possible to employ calcium hydroxide, sodium hydroxide and calcium carbonate, and calcium oxide.

The solids content of the aqueous solution of the resulting naphthalenesulfonic acid polycondensate i) varies depending on use, and for use as a cement dispersant of the invention, the solids content is preferably 30 to 45% by weight. If necessary, the aqueous solution may be dried and powdered to give a powdered water-soluble salt of a naphthalenesulfonic acid polycondensate i) which may then be used in powdered form in the cement dispersant. Drying and powdering can be carried out by spray drying, drum drying, freeze drying, etc.

Suitably, the naphthalenesulfonic acid polycondensate i) has a weight-average molecular weight of 2000 to 60000 g/mol, preferably 3000 to 40000 g/mol, more preferably 3000 to 12000 g/mol. The molecular weight of the naphthalenesulfonic acid polycondensate is suitably determined by gel permeation chromatography (GPC) on a stationary phase containing sulfonated styrene-divinylbenzene with an eluent of 80 vol.-% of an aqueous solution of Na₂HPO₄ (0.07 mol/L) and 20 vol.-% of acetonitrile after calibration with polystyrene sulfonate standards.

The phosphorylated polycondensate ii) is obtainable by a condensation reaction of
ii-1) an aromatic compound having a phosphate moiety,
ii-2) an alkoxylated hydroxyaryl compound having a polyoxyalkylene chain with 3 to 130 oxyalkylene units, and
ii-3) formaldehyde,
in a weight ratio of ii-1) : ii-2) of 2 : 98 to 40 : 60, preferably 5 : 95 to 30 : 70, more preferably 10 : 90 to 20 : 80.

The aromatic compound having a phosphate moiety ii-1) may be represented by formula (II): 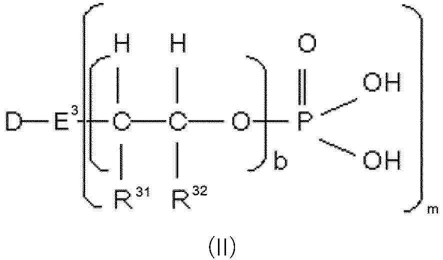 wherein, in formula (II),
D is a substituted or unsubstituted aromatic or heteroaromatic compound having 5 to 10 carbon atoms,
E³ is N, NH or O,
m = 2 if E³ = N and m = 1 if E³ = NH or O,
R³¹ and R³², independently of one another, are identical or different and are represented by a branched or straight-chain C₁- to C₁₀-alkyl radical, C₅- to C₈-cycloalkyl radical, aryl radical, heteroaryl radical or H, and
b are identical or different and are represented by an integer from 0 to 300.

Suitably, moiety D is represented by phenyl, 2-hydroxy¬phenyl, 3-hydroxyphenyl, 4-hydroxyphenyl, 2-methoxyphenyl, 3-methoxyphenyl, 4-methoxyphenyl, naphthyl, 2-hydroxynaphthyl, 4-hydroxynaphthyl, 2-methoxy¬naphthyl, 4-methoxynaphthyl, preferably phenyl.

Preferably, moiety E³ is represented by O.

Suitably, the substituents R³¹ and R³² may be chosen independently of one another and are preferably represented by H, methyl, ethyl or phenyl, more preferably by H or methyl, most preferably by H.

Suitably, b is an integer from 0 to 10, preferably 1 to 7, more preferably 1 to 5. The respective substituents, the length of which is defined by b, may consist of uniform building blocks, but a mixture of different building blocks may also be expedient. Furthermore, the substituents may each have the same chain length, b being represented by a number. As a rule, however, it will be expedient if mixtures having different chain lengths are present in each case so that the radicals of the monomers or structural units in the polycondensate have different numerical values for b.

For monomer component ii-2), i.e. the alkoxylated hydroxyaryl compound having a polyoxyalkylene chain with 3 to 130 oxyalkylene units, the definitions and preferred meanings described above for component i-2) equally apply.

For monomer component ii-3), i.e. formaldehyde, the definitions and preferred meanings described above for component i-3) equally apply.

That is, for the preparation of the phosphorylated polycondensate ii), components ii-1) and ii-2) are reacted with formaldehyde ii-3). Suitably, the formaldehyde ii-3) is added in form of a 37% formaldehyde solution in water. Formaldehyde ii-3) is present in at least a stoichiometric amount, that is, formaldehyde ii-3) is used in a molar amount equal to the sum of the molar amounts of ii-1) and ii-2). Formaldehyde ii-3) may be used in excess of the stoichiometric amount.

Suitably, the phosphorylated polycondensate ii) has a weight-average molecular weight of 4000 g/mol to 150000 g/mol, preferably 20000 to 75000 g/mol.

The condensation reaction of the compounds ii-1), ii-2) and ii-3) can be carried out according to processes known per se.

The phosphorylated polycondensate ii) may be present as an aqueous solution containing 35 to 75% by weight of water and 25 to 65% by weight of dissolved dry matter, preferably 40 to 60% by weight of water and 40 to 60% by weight of dissolved dry matter, more preferably 45 to 55% by weight of water and 45 to 55% by weight of dissolved dry matter. The dry matter consists essentially of the anhydrous phosphorylated polycondensate.

The polycarboxylate ether iii) has a carbon-chain backbone with anionic and/or anionogenic groups and polyoxyalkylene side chains having an average of 3 to 130 oxyalkylene units. The polycarboxylate ethers iii) may be prepared by free radical polymerization of suitable *α*, *β*-ethylenically unsaturated monomers.

Anionogenic groups are the acid groups present in the polycarboxylate ether iii), which can be transformed to the respective anionic group under alkaline conditions.

Preferably, the anionic and anionogenic groups are carboxyl, carboxylate or phosphate groups, hydrogenphosphate or dihydrogenphosphate groups.

The polycarboxylate ether iii) preferably comprises structural units of formulae (la), (Ib), (Ic) and/or (Id), which impart may anionic and/or anionogenic groups. The formulae (la), (Ib), (Ic) and/or (Id) may be identical or different both within individual polymer molecules and between different polymer molecules. 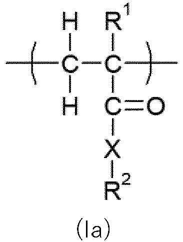 wherein
- R¹: is H, C₁-C₄ alkyl, CH₂COOH or CH₂CO-X-R^{3A}, preferably H or methyl;
- X: is NH-(Cₙ₁H₂ₙ₁) or O-(Cₙ₁H₂ₙ₁) with n1 = 1, 2, 3 or 4, the nitrogen atom or the oxygen atom being bonded to the CO group;
- R²: is OM, PO₃M₂, or O-PO₃M₂; or
- X: is a chemical bond and R² is OM;
- R^{3A}: is PO₃M₂, or O-PO₃M₂; 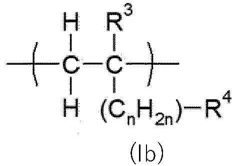
wherein
- R³: is H or C₁-C₄ alkyl, preferably H or methyl;
- n: is 0, 1, 2, 3 or 4;
- R⁴: is PO₃M₂, or O-PO₃M₂; 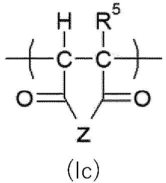
wherein
- R⁵: is H or C₁-C₄ alkyl, preferably H;
- Z: is O or NR⁷;
- R⁷: is H, (Cₙ₁H₂ₙ₁)-OH, (Cₙ₁H₂ₙ₁)-PO₃M₂, (Cₙ₁H₂ₙ₁)-OPO₃M₂, (C₆H₄)-PO₃M₂, or (C₆H₄)-OPO₃M₂, and
- n1: is 1, 2, 3 or 4; 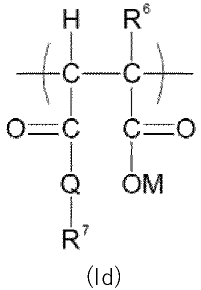
wherein
- R⁶: is H or C₁-C₄ alkyl, preferably H;
- Q: is NR⁷ or O;
- R⁷: is H, (Cₙ₁H₂ₙ₁)-OH, (Cₙ₁H₂ₙ₁)-PO₃M₂, (Cₙ₁H₂ₙ₁)-OPO₃M₂, (C₆H₄)-PO₃M₂, or (C₆H₄)-OPO₃M₂,
- n1: is 1, 2, 3 or 4; and
where each M independently is H or a cation equivalent.

Preferably, the polycarboxylate ether iii) comprises structural units of the formula (la) wherein R¹ is H or methyl; and/or at least one structural unit of the formula (Ib) wherein R³ is H or methyl; and/or at least one structural unit of the formula (Ic) wherein R⁵ is H or methyl and Z is O; and/or at least one structural unit of the formula (Id) wherein R⁶ is H and Q is O.

Preferably, the polycarboxylate ether iii) comprises as structural units of the formula (la) wherein R¹ is H or methyl and XR² is OM or X is O(CₙH₂ₙ) with n1 = 1, 2, 3 or 4, more particularly 2, and R² is O-PO₃M₂.

With particular preference, the structural unit of formula (la) is a methacrylic acid or acrylic acid unit, the structural unit of formula (Ic) is a maleic anhydride unit, and the structural unit of formula (Id) is a maleic acid or maleic monoester unit.

In the case that the monomers (I) are phosphoric esters or phosphonic esters, they may also include the corresponding diesters and triesters and also the monoester of diphosphoric acid. In general, these esters come about during the esterification of organic alcohols with phosphoric acid, polyphosphoric acid, phosphorus oxides, phosphorus halides or phosphorus oxyhalides, and/or the corresponding phosphonic acid compounds, alongside the monoester, in different proportions, as for example 5 to 30 mol-% of diester and 1 to 15 mol-% of triester and also 2 to 20 mol-% of the monoester of diphosphoric acid.

The polycarboxylate ether iii) may comprise structural units of the formulae (IIa), (IIb), (IIc) and/or (IId), which impart polyether side chains. The formulae (Ila), (IIb), (IIc) and/or (Ild) may be identical or different not only within individual polymer molecules but also between different polymer molecules. All structural units A as defined below may be identical or different both within individual polyether side chains and between different polyether side chains. 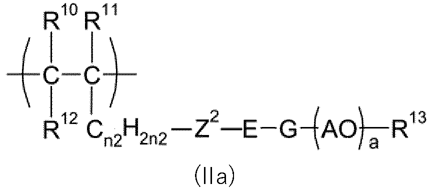 wherein
R¹⁰, R¹¹ and R¹² independently of one another are H or C₁-C₄ alkyl, preferably H or methyl;
Z² is O or S;
E is C₂-C₆ alkylene, cyclohexylene, CH₂-C₆H₁₀, 1,2-phenylene, 1,3-phenylene or 1,4-phenylene;
G is O, NH or CO-NH; or
E and G together are a chemical bond;
A is C₂-C₅ alkylene or CH₂CH(C₆H₅), preferably C₂-C₃ alkylene;
n2 is 0, 1, 2, 3, 4 or 5;
a is an integer from 3 to 130;
R¹³ is H, an unbranched or branched C₁-C₄ alkyl group, CO-NH₂ or COCH₃;

Preferably, the structural unit of formula (IIa) is an alkoxylated isoprenyl unit, alkoxylated hydroxybutyl vinyl ether unit, alkoxylated (meth)allyl alcohol unit or a vinylated methylpolyalkylene glycol unit, in each case preferably with an arithmetic average of 3 to 130 oxyalkylene groups. 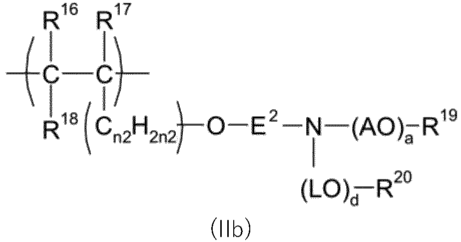 wherein
- R¹⁶, R¹⁷ and R¹⁸: independently of one another are H or C₁-C₄ alkyl, preferably H;
- E²: is C₂-C₆ alkylene, cyclohexylene, CH₂-C₆H₁₀, 1,2-phenylene, 1,3-phenylene, or 1,4-phenylene, or is a chemical bond;
- A: is C₂-C₅ alkylene or CH₂CH(C₆H₅), preferably C₂-C₃ alkylene;
- n2: is 0, 1, 2, 3, 4 or 5;
- L: is C₂-C₅ alkylene or CH₂CH(C₆H₅), preferably C₂-C₃ alkylene;
- a: is an integer from 3 to 130;
- d: is an integer from 3 to 130;
- R¹⁹: is H or C₁-C₄ alkyl; and
- R²⁰: is H or C₁-C₄ alkyl; 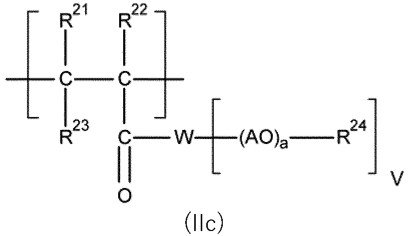
wherein
- R²¹, R²² and R²³: independently are H or C₁-C₄ alkyl, preferably H;
- W: is O, NR²⁵, or is N;
- V: is 1 if W = O or NR²⁵, and is 2 if W = N;
- A: is C₂-C₅ alkylene or CH₂CH(C₆H₅), preferably C₂-C₃ alkylene;
- a: is an integer from 3 to 130;
- R²⁴: is H or C₁-C₄ alkyl;
- R²⁵: is H or C₁-C₄ alkyl; 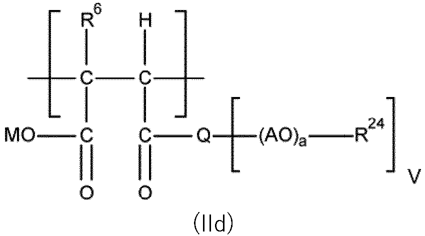
wherein
- R⁶: is H or C₁-C₄ alkyl, preferably H;
- Q: is NR¹⁰, N or O;
- V: is 1 if Q = O or NR¹⁰ and is 2 if Q = N;
- R¹⁰: is H or C₁-C₄ alkyl;
- R²⁴: is H or C₁-C₄ alkyl;
- A: is C₂-C₅ alkylene or CH₂CH(C₆H₅), preferably C₂-C₃ alkylene; and
- a: is an integer from 3 to 130;
where each M independently is H or a cation equivalent.

Besides the structural units of the formulae (I) and (II), the polycarboxylate ether iii) may also comprise further structural units, which are derived from radically polymerizable monomers, such as hydroxyethyl (meth)acrylate, hydroxypropyl (meth)acrylate, (meth)acrylamide, (C₁-C₄) alkyl (meth)acrylates, styrene, styrenesulfonic acid, 2-acrylamido-2-methylpropanesulfonic acid, (meth)allylsulfonic acid, vinylsulfonic acid, vinyl acetate, acrolein, N-vinylformamide, vinylpyrrolidone, (meth)allyl alcohol, isoprenol, 1-butyl vinyl ether, isobutyl vinyl ether, aminopropyl vinyl ether, ethylene glycol monovinyl ether, 4-hydroxybutyl monovinyl ether, (meth)acrolein, crotonaldehyde, dibutyl maleate, dimethyl maleate, diethyl maleate, dipropyl maleate, etc.

The polycarboxylate ether iii) comprising the structural units (I) and (II) may be prepared by conventional methods, for example by free radical polymerization or controlled radical polymerization as, e.g., described in EP 0 894 811, EP 1 851 256, EP 2 463 314, and EP 0 753 488.

Suitably, such polycarboxylate ether iii) has a weight-average molecular weight of 5000 to 200000 g/mol, preferably 10000 to 80000 g/mol, more preferably 20000 to 70000g/mol.

Preferably, the polycarboxylate ether iii) comprises:
(a) at least one structural unit of the formula (IIa) wherein R¹⁰ and R¹² are H, R¹¹ is H or methyl, E and G together are a chemical bond, A is C₂-C₃ alkylene, a is 3 to 130, and R¹³ is H or an unbranched or branched C₁-C₄ alkyl group; and/or
(b) at least one structural unit of the formula (IIb) wherein R¹⁶ and R¹⁸ are H, R¹⁷ is H or methyl, E² is an unbranched or branched C₂-C₆ alkylene group, A is C₂-C₃ alkylene, L is C₂-C₃ alkylene, a is an integer from 3 to 130, d is an integer from 3 to 130, R¹⁹ is H or an unbranched or branched C₁-C₄ alkyl group, and R²⁰ is H or an unbranched or branched C₁-C₄ alkyl group; and/or
(c) at least one structural unit of the formula (IIc) wherein R²¹ and R²³ are H, R²² is H or methyl, A is C₂-C₃ alkylene, a is an integer from 3 to 130, and R²⁴ is H or an unbranched or branched C₁-C₄ alkyl group; and/or
(d) at least one structural unit of the formula (IId) wherein R⁶ is H, Q is O, A is C₂-C₃ alkylene, and a is an integer from 3 to 130.

The polycarboxylate ether iii) may comprise at least one structural unit of the formula (IIa) and/or (IIc).

The polycarboxylate ether iii) may comprise structural units of the formulae (I) and (II), e.g. of the formulae (la) and (Ila), or of the formulae (la) and (IIc), or of the formulae (Ic) and (Ila), or of the formulae (la), (Ic) and (Ila).

Preferably, the polycarboxylate ether iii) may comprise units of (I) and (II) according to embodiments 1 to 3 of the following table:

| # | (I) | (II) |
|---|---|---|
| 1 | hydroxyethyl acrylate phosphoric acid ester and/or hydroxyethyl methacrylate phosphoric acid ester | C₁-C₄ alkyl-polyethylene glycol acrylic acid ester and/or C₁-C₄ alkyl-polyethylene glycol methacrylic acid ester |
| 2 | acrylic acid and/or methacrylic acid | C₁-C₄ alkyl-polyethylene glycol acrylic acid ester and/or C₁-C₄ alkyl-polyethylene glycol methacrylic acid ester |
| 3 | acrylic acid, methacrylic acid and/or maleic acid | vinyloxy-C₂-C₄ alkylene-polyethylene glycol, allyloxy-polyethylene glycol, methallyloxy-polyethylene glycol and/or isoprenyloxy-polyethylene glycol |

More preferably, the polycarboxylate ether iii) may comprise units of (I) and (II) according to embodiments 4 to 13 of the following table:

| # | (I) | (II) |
|---|---|---|
| 4 | hydroxyethyl methacrylate phosphoric acid ester | C₁-C₄ alkyl-polyethylene glycol methacrylic acid ester or polyethylene glycol methacrylic acid ester |
| 5 | methacrylic acid | C₁-C₄ alkyl-polyethylene glycol methacrylic acid ester or polyethylene glycol methacrylic acid ester |
| 6 | acrylic acid and maleic acid | vinyloxy-C₂-C₄ alkylene-polyethylene glycol |
| 7 | acrylic acid and maleic acid | isoprenyloxy-polyethylene glycol |
| 8 | acrylic acid | vinyloxy-C₂-C₄ alkylene-polyethylene glycol |
| 9 | acrylic acid | isoprenyloxy-polyethylene glycol |
| 10 | acrylic acid | methallyloxy-polyethylene glycol |
| 11 | maleic acid | isoprenyloxy-polyethylene glycol |
| 12 | maleic acid | allyloxy-polyethylene glycol |
| 13 | maleic acid | methallyloxy-polyethylene glycol |

Suitably, the molar ratio of structural units (I) to structural units (II) varies from 1:3 to about 10:1, preferably 1:1 to 10:1, more preferably 3:1 to 6:1.

The polycarboxylate ether may be an aqueous product in the form of a solution, emulsion or dispersion or in solid form, for example as a powder, after a drying step. In the latter case, the water content is preferably less than 10% by weight, more preferably less than 5% by weight. Suitably, a part of the water, e.g. at least 10% by weight, may be replaced by organic solvents, e.g. alcohols such as ethanol, (iso)propanol and 1-butanol, including its isomers, or ketones such as acetone. By the use of the organic solvents, it is possible to influence the solubility and hence the crystallization behavior of the polycarboxylate ether.

In an embodiment, the components ii) and/or iii) have a charge density of 0.5 to 2.7 meq/g, preferably 0.7 to 2.5 meq/g, of polymer. The milliequivalent number refers to carboxyl groups or carboxyl groups releasable from anionogenic groups contained in these components, assuming that all carboxyl groups are in unneutralized form.

In an embodiment, the weight ratio of component i) to the total amount of components ii) and iii) is in the range of 1 : 99 to 99 : 1, preferably 30 : 70 to 70 : 30.

The solids content of the aqueous solution of the inventive cement dispersant varies depending on use. In an embodiment, the cement dispersant has a solids content of 10 to 50% by weight, preferably 20 to 40% by weight.

The invention further relates to a construction composition comprising
a) at least one cementitious binder, and
b) the cement dispersant as described above.

Typically, the cement dispersant is incorporated in the construction composition together with the mixing water or after addition of the mixing water. In this case, it is referred to as construction composition "in freshly mixed form" in the context of the present patent application. In other words, the construction composition in freshly mixed may, for example, be concrete, mortar or grout. In an embodiment, the construction composition, in freshly mixed form, has a ratio of water to cementitious binder in the range of 0.25 to 0.5, preferably 0.40 to 0.45.

The term "mortar" or "grout" denotes a cement paste to which are added fine aggregates, i.e. aggregates whose diameter is between 150 µm and 5 mm (for example sand), and optionally very fine aggregates. A grout is a mixture of sufficiently low viscosity for filling in voids or gaps. Mortar viscosity is high enough to support not only the mortar's own weight but also that of masonry placed above it. The term "concrete" denotes a mortar to which are added coarse aggregates. In the context of the present patent application, the term "coarse aggregates" denotes aggregates with a diameter of 5 to 20 mm.

The construction composition comprises a cementitious binder.

In an embodiment, the cementitious binder comprises a cement selected from Portland cement, calcium aluminate cement and sulfoaluminate cement.

In an embodiment, the cementitious binder additionally comprises a supplementary cementitious material such as a latent hydraulic binder or a pozzolanic binder.

In general terms, the above-mentioned latent hydraulic binders can be selected from industrial and/or synthetic slag, in particular from blast furnace slag, electrothermal phosphorous slag, steel slag and mixtures thereof. The "pozzolanic binders" can generally be selected from amorphous silica, preferably precipitated silica, fumed silica and microsilica, ground glass, metakaolin, aluminosilicates, fly ash, preferably brown-coal fly ash and hard-coal fly ash, natural pozzolans such as tuff, trass and volcanic ash, calcined clays, burnt shale, rice husk ash, natural and synthetic zeolites and mixtures thereof.

The slag can be either industrial slag, i.e. waste products from industrial processes, or else synthetic slag. The latter can be advantageous because industrial slag is not always available in consistent quantity and quality.

Blast furnace slag (BFS) is a waste product of the glass furnace process. Other materials are granulated blast furnace slag (GBFS) and ground granulated blast furnace slag (GGBFS), which is granulated blast furnace slag that has been finely pulverized. Ground granulated blast furnace slag varies in terms of grinding fineness and grain size distribution, which depend on origin and treatment method, and grinding fineness influences reactivity here. The Blaine value is used as parameter for grinding fineness, and typically has an order of magnitude of from 200 to 1000 m² kg⁻¹, preferably from 300 to 500 m² kg⁻¹. Finer milling gives higher reactivity.

Herein, the expression "blast furnace slag" is intended to comprise materials resulting from all of the levels of treatment, milling, and quality mentioned (i.e. BFS, GBFS and GGBFS). Blast furnace slag generally comprises from 30 to 45% by weight of CaO, about 4 to 17% by weight of MgO, about 30 to 45% by weight of SiO₂ and about 5 to 15% by weight of Al₂O₃, typically about 40% by weight of CaO, about 10% by weight of MgO, about 35% by weight of SiO₂ and about 12% by weight of Al₂O₃.

Electrothermal phosphorous slag is a waste product of electrothermal phosphorous production. It is less reactive than blast furnace slag and comprises about 45 to 50% by weight of CaO, about 0.5 to 3% by weight of MgO, about 38 to 43% by weight of SiO₂, about 2 to 5% by weight of Al₂O₃ and about 0.2 to 3% by weight of Fe₂O₃, and also fluoride and phosphate. Steel slag is a waste product of various steel production processes with greatly varying composition.

Amorphous silica is preferably an X ray-amorphous silica, i.e. a silica for which the powder diffraction method reveals no crystallinity. The content of SiO₂ in the amorphous silica is advantageously at least 80% by weight, preferably at least 90% by weight. Precipitated silica is obtained on an industrial scale by way of precipitating processes starting from water glass. Precipitated silica from some production processes is also called silica gel.

Fumed silica is produced via reaction of chlorosilanes, for example silicon tetrachloride, in a hydrogen/oxygen flame. Fumed silica is an amorphous SiO₂ powder of particle diameter from 5 to 50 nm with specific surface area of from 50 to 600 m² g⁻¹.

Microsilica is a by-product of silicon production or ferrosilicon production, and likewise consists mostly of amorphous SiO₂ powder. The particles have diameters of the order of magnitude of 0.1 µm. Specific surface area is of the order of magnitude of from 15 to 30 m² g⁻¹.

Metakaolin is produced when kaolin is dehydrated. Whereas at from 100 to 200 ° C kaolin releases physically bound water, at from 500 to 800 ° C a dehydroxylation takes place, with collapse of the lattice structure and formation of metakaolin (Al₂Si₂O₇). Accordingly pure metakaolin comprises about 54% by weight of SiO₂ and about 46% by weight of Al₂O₃.

Fly ash is produced inter alia during the combustion of coal in power stations. Class C fly ash (brown-coal fly ash) comprises according to WO 08/012438 about 10% by weight of CaO, whereas class F fly ash (hard-coal fly ash) comprises less than 8% by weight, preferably less than 4% by weight, and typically about 2% by weight of CaO.

In case the construction composition contains a low amount of hydraulic binder (e.g. ≤ 10%), an alkaline activator can be further added to promote strength development. Alkaline activators are preferably used in the binder system, such alkaline activators are for example aqueous solutions of alkali metal fluorides, alkali metal hydroxides, alkali metal aluminates or alkali metal silicates, such as soluble waterglass, and mixtures thereof.

In an embodiment, the latent hydraulic binder is blast furnace slag.

The construction composition may further comprise a filler material. In the context of the present patent application, a "filler material" denotes, for example, silica, quartz, sand, crushed marble, glass spheres, granite, basalt, limestone, sandstone, calcite, marble, serpentine, travertine, dolomite, feldspar, gneiss, alluvial sands, any other durable aggregates, and mixtures thereof. In particular, the fillers do not work as a binder.

The construction composition may additionally comprise at least one retarder and/or accelerator.

It is important to maintain the construction composition in a pumpable slurry state until it is placed in a desired location. For this purpose, a cement retarder, which is sometimes referred to as a set retarder or simply a retarder, can be used in the construction composition. A retarder retards the setting process and helps to provide an adequate pumping time to place the cement slurry. Compositions commonly used in cementing operations for delaying the set time of a cement composition include lignosulfates, hydroxycarboxylic acids (e.g., gluconic acid, citric acid and tartaric acid), phosphonic acid derivatives, synthetic polymers (e.g., copolymers of 2-acrylamido-2-methylpropane sulfonic acid ("AMPS")), borate salts, and combinations thereof. Other conventionally used retarders are carbohydrates including saccharides such as sucrose, glucose, fructose, high fructose corn syrup or cane molasses, lactose, raffinose, and dextrin.

Suitably, an accelerator as conventionally used may be selected from alkaline metal salts, alkaline earth metal salts, or aluminum salts, in particular lithium carbonate, potassium carbonate, lithium sulfate, lithium nitrate, sodium nitrate, calcium nitrate, lithium formiate, sodium formiate, calcium formiate, or aluminum sulfate; alkanolamines such as diethanolamine, triethanolamine and methyl diethanolamine. It is considered that addition of C-S-H (calcium silicate hydrate) nanoparticles has a seeding effect which also accelerates the hardening.

The construction composition may additionally comprise dispersants other than the naphthalenesulfonic acid polycondensate i), the phosphorylated polycondensate ii), and the polycarboxylate ether iii) for inorganic binders, especially a dispersant for cementitious mixtures like concrete or mortar, in order to accommodate different purposes such as to achieve still lower water to cement ratios. If such mixtures with other dispersants are used, the inventive cement dispersant may be present in an amount of 1 to 99 wt.-%, preferably 5 to 95 wt.-%, more preferably at least about 30 wt.-%, relative to the total amount of dispersants.

Suitably, the dispersant other than the naphthalenesulfonic acid polycondensate i), the phosphorylated polycondensate ii), and the polycarboxylate ether iii) may be selected from
- colloidally disperse preparations of polyvalent metal cations, such as Al³⁺, Fe³⁺ or Fe²⁺, and a polymeric dispersant which comprises anionic and/or anionogenic groups and polyether side chains, and the polyvalent metal cation is present in a superstoichiometric quantity, calculated as cation equivalents, based on the sum of the anionic and anionogenic groups of the polymeric dispersant,
- sulfonated melamine-formaldehyde condensates,
- lignosulfonates,
- sulfonated ketone-formaldehyde condensates,
- sulfonated naphthalene-formaldehyde condensates,
- phosphonate containing dispersants,
- mixtures thereof.

In one embodiment, the optional dispersant is selected from colloidally disperse preparations of polyvalent metal cations, such as Al³⁺, Fe³⁺ or Fe²⁺, and a polymeric dispersant which comprises anionic and/or anionogenic groups and polyether side chains. The polyvalent metal cation is present in a superstoichiometric quantity, calculated as cation equivalents, based on the sum of the anionic and anionogenic groups of the polymeric dispersant. Such dispersants are described in further detail in WO 2014/013077 A1.

Suitable sulfonated melamine-formaldehyde condensates are of the kind frequently used as plasticizers for hydraulic binders (also referred to as MFS resins). Sulfonated melamine-formaldehyde condensates and their preparation are described in, for example, CA 2 172 004 A1, DE 44 1 1 797 A1, US 4,430,469, US 6,555,683 and CH 686 186 and also in Ullmann's Encyclopedia of Industrial Chemistry, 5th Ed., vol. A2, page 131, and Concrete Admixtures Handbook - Properties, Science and Technology, 2. Ed., pages 411, 412. Preferred sulfonated melamine-formaldehyde condensates encompass (greatly simplified and idealized) units of the formula (VI) 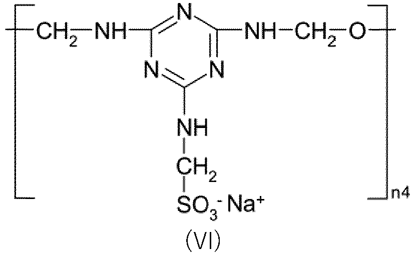 wherein n4 generally stands for 10 to 300. The molecular weight is situated preferably in the range from 2500 to 80000 g/mol. Additionally, to the sulfonated melamine units it is possible for other monomers to be incorporated by condensation. Particularly suitable is urea. Moreover, further aromatic units as well may be incorporated by condensation, such as gallic acid, aminobenzenesulfonic acid, sulfanilic acid, phenolsulfonic acid, aniline, ammoniobenzoic acid, dialkoxybenzenesulfonic acid, dialkoxybenzoic acid, pyridine, pyridinemonosulfonic acid, pyridinedisulfonic acid, pyridinecarboxylic acid and pyridinedicarboxylic acid. An example of melaminesulfonate-formaldehyde condensates are the Melment^{®} products distributed by Master Builders Solutions Deutschland GmbH.

Suitable lignosulfonates are products which are obtained as by-products in the paper industry. They are described in Ullmann's Encyclopedia of Industrial Chemistry, 5th Ed., vol. A8, pages 586, 587. They include units of the highly simplified and idealizing formula (VII)

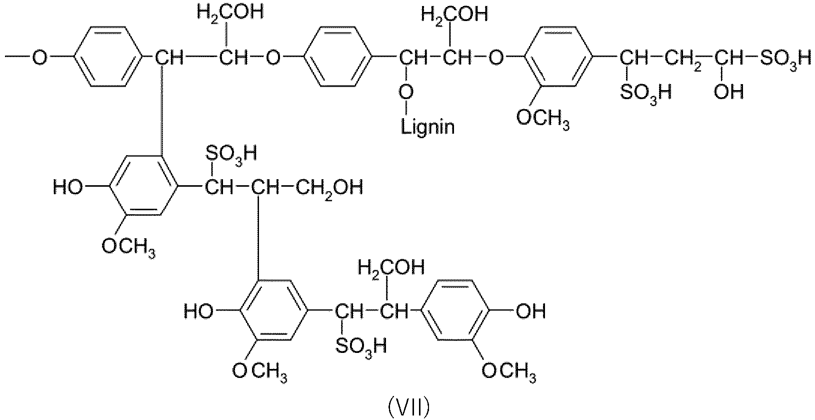

Lignosulfonates have molecular weights of between 2000 and 100000 g/mol. In general, they are present in the form of their sodium, calcium and/or magnesium salts. Examples of suitable lignosulfonates are the Borresperse products distributed by Borregaard LignoTech, Norway.

Suitable sulfonated ketone-formaldehyde condensates are products incorporating a monoketone or diketone as ketone component, preferably acetone, butanone, pentanone, hexanone or cyclohexanone. Condensates of this kind are known and are described in WO 2009/103579, for example. Sulfonated acetone-formaldehyde condensates are preferred. They generally comprise units of the formula (VIII) (according to J. Plank et al., J. Appl. Poly. Sci. 2009, 2018-2024): 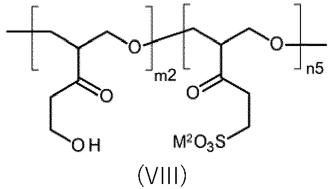 wherein m2 and n5 are generally each 10 to 250, M² is an alkali metal ion, such as Na⁺, and the ratio m2:n5 is in general in the range from about 3:1 to about 1:3, more particularly about 1.2:1 to 1:1.2. Furthermore, it is also possible for other aromatic units to be incorporated by condensation, such as gallic acid, aminobenzenesulfonic acid, sulfanilic acid, phenolsulfonic acid, aniline, ammoniobenzoic acid, dialkoxybenzenesulfonic acid, dialkoxybenzoic acid, pyridine, pyridinemonosulfonic acid, pyridinedisulfonic acid, pyridinecarboxylic acid and pyridinedicarboxylic acid. Examples of suitable sulfonated acetone-formaldehyde condensates are the Melcret K1L products distributed by Master Builders Solutions Deutschland GmbH.

Suitable sulfonated naphthalene-formaldehyde condensates are products obtained by sulfonation of naphthalene and subsequent polycondensation with formaldehyde. They are described in references including Concrete Admixtures Handbook - Properties, Science and Technology, 2. Ed., pages 411 -413 and in Ullmann's Encyclopedia of Industrial Chemistry, 5th Ed., vol. A8, pages 587, 588. They comprise units of the formula (IX)

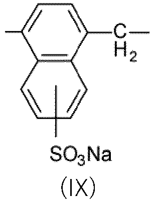

Typically, molecular weights (MW) of between 1000 and 50000 g/mol are obtained. Furthermore, it is also possible for other aromatic units to be incorporated by condensation, such as gallic acid, aminobenzenesulfonic acid, sulfanilic acid, phenolsulfonic acid, aniline, ammoniobenzoic acid, dialkoxybenzenesulfonic acid, dialkoxybenzoic acid, pyridine, pyridinemonosulfonic acid, pyridinedisulfonic acid, pyridinecarboxylic acid and pyridinedicarboxylic acid. Examples of suitable sulfonated β-naphthalene-formaldehyde condensates are the Melcret 500 L products distributed by Master Builders Solutions Deutschland GmbH.

Generally, phosphonate containing dispersants incorporate phosphonate groups and polyether side groups.

Suitable phosphonate containing dispersants are those according to the following formula (X)

R-(OA²)ₙ₆-eN-[CH₂-PO(OM³₂)₂]₂ (X)

wherein
- R: is H or a hydrocarbon residue, preferably a C₁-C₁₅ alkyl radical,
- A²: is independently C₂-C₁₈ alkylene, preferably ethylene and/or propylene, most preferably ethylene,
- n6: is an integer from 5 to 500, preferably 10 to 200, most preferably 10 to 100, and
- M³: is H, an alkali metal, 1/2 alkaline earth metal and/or an amine.

In an embodiment, the construction composition comprises, relative to the total amount of the construction composition,
- the cementitious binder (calculated as cement clinker) in an amount of 7 to 15 vol.-%, preferably 12 to 14 vol.-%,
- sand in an amount of 25 to 30 vol.-%, preferably 28 to 30 vol.-%, and
- coarse aggregates in an amount of 40 to 50 vol.-%, preferably 40 to 45 vol.-%.

The construction composition may further comprise one or more supplementary cementitious material. Suitable supplementary cementitious materials include those mentioned above. The construction composition may comprise the supplementary cementitious material in an amount, relative to the weight of the cementitious binder, of 5 to 80 wt.-%, for example 15 to 70 wt.-%.

The construction composition typically comprises water in an amount, relative to the total amount of the construction composition, of 8 to 15 vol.-%, preferably 10 to 12 vol.-%.

Upon preparing a freshly mixed construction composition, air may be entrained in the construction composition. Preferably, the amount of air entrained is controlled depending on the properties as desired, i.e. to entrain more air when freeze-thaw resistance is needed, less when maximum compressive strength is required. The naphthalenesulfonic acid polycondensate, at useful dosages, does not result in unacceptably high air entrainment. The construction composition typically comprises air in an amount, relative to the total amount of the construction composition, of 1 to 6 vol.-%. More specifically, an air-entrained construction composition generally comprises 5 to 6 vol.-% of air; and a non-air-entrained construction composition generally comprises 1 to 2 vol.-% of air.

### Examples

The present invention is described in detail below with reference to the examples that follow.

### Methods

Herein, the weight-average molecular weight values have been determined by gel permeation chromatography (GPC). As a stationary phase, a sequence of 3 columns PSS MCX, 5 µm, 1000 Å, ID 8.0 mm x 300 mm (available from PSS), conditioned at 40 ° C, has been used. As a mobile phase, an eluent of 80 vol.-% of an aqueous solution of Na₂HPO₄ (0.07 mol/L) and 20 vol.-% of acetonitrile has been used. The injection volume was 100 µL at a flow rate of 1.0 mL/min. The molecular weight calibration was performed with polystyrene sulfonate standards for RI detector (standards available from PSS Polymer Standards Service).

### Materials

Naphthalenesulfonic acid polycondensates i) according to examples 1 to 12 have been prepared, see tables 1 and 2. The following procedure describes the production of naphthalenesulfonic acid polycondensate i) of example 5. Examples 1 to 4 and 6 to 12 were carried out analogously.

In a small scale laboratory procedure, 194.2 g of *β*-naphthalene sulfonic acid (available from ABCR, about 10 wt.-% of moisture), 18.0 g of concentrated H₂SO₄ and 16.2 g of water were charged into an open reactor, heated to 110 ° C to melt the mixture and stirred. At the desired internal temperature, 33.8 g of Pluriol ^{®} A 750 PH (available from BASF SE) were added to the mixture. For adding 27.1 g of formaldehyde to the resulting mixture, a 37% solution of formaldehyde was dropwise added thereto at 110 ° C over a period of 1 h. After completion of the dropwise addition, the mixture was heated to reflux for 7 h. After 6 h, 20.0 g of water were added; after 7 h, another portion of 20.0 g of water was added. The reaction mixture was finally cooled to 80 ° C and neutralized by addition of 251.0 g of aqueous NaOH (20%).

**Table 1: Naphthalenesulfonic acid polycondensates i) with ethoxylated phenol.^{[1]}**

| # | amount of *β*-naphthalene sulfonic acid ^{[2]} [mol-%] | ethoxylated phenol: Pluriol ^{®} ··· ^{[3]} | average number of oxyethylene units per molecule | MW of ethoxylated phenol [g/mol] | amount of ethoxylated phenol ^{[2]} [mol-%] |
|---|---|---|---|---|---|
| 1 | 97.5 | ··· A500PH | 10 | 500 | 2.5 |
| 2 | 95 | ··· A500PH | 10 | 500 | 5 |
| 3 | 90 | ··· A500PH | 10 | 500 | 10 |
| 4 | 97.5 | ··· A750PH | 15 | 750 | 2.5 |
| 5 | 95 | ··· A750PH | 15 | 750 | 5 |
| 6 | 90 | ··· A750PH | 15 | 750 | 10 |
| 7 | 97.5 | ··· A1500PH | 32 | 1500 | 2.5 |
| 8 | 95 | ··· A1500PH | 32 | 1500 | 5 |
| 9 | 97.5 | ··· A5010PH | 100 | 4500 | 2.5 |

| | | | | | |
|---|---|---|---|---|---|
| [1] Formaldehyde i-3) is added in a molar amount equal to the sum of the molar amounts of *β*-naphthalene sulfonic acid i-1) and the ethoxylated phenol compound i-2). [2] Amount relative to the total amount of *β*-naphthalene sulfonic acid and ethoxylated phenol. [3] Available from BASF SE. | | | | | |

**Table 2: Naphthalenesulfonic acid polycondensates i) with ethoxylated naphthol.^{[1]}**

| # | amount of *β*-naphthalene sulfonic acid ^{[2]} [mol-%] | ethoxylated naphthol: Lugalvan ^{®}··· _{[3]} | average number of oxyethylene units per molecule | MW of ethoxylated naphthol [g/mol] | amount of ethoxylated naphthol ^{[2]} [mol-%] |
|---|---|---|---|---|---|
| 10 | 97.5 | ··· BNO12 | 12 | 650 | 2.5 |
| 11 | 95 | ··· BNO12 | 12 | 650 | 5 |
| 12 | 90 | ··· BNO12 | 12 | 650 | 10 |

| | | | | | |
|---|---|---|---|---|---|
| [1] Formaldehyde i-3) is added in a molar amount equal to the sum of the molar amounts of *β*-naphthalene sulfonic acid i-1) and ethoxylated naphthol i-2). [2] Amount relative to the total amount of *β*-naphthalene sulfonic acid and ethoxylated phenol. [3] Available from BASF SE. | | | | | |

Construction compositions according to examples 13 to 36 of tables 3 and 4 have been prepared with the following specifications (material per 1 m³ of wet volume concrete):
- 562 kg/m³ of Ordinary Portland Cement
- plasticizer(s) as shown in table 3
- 296 kg/m³ of quartz sand (0.1 to 0.3 mm)
- 1154 kg/m³ of sand (0 to 4 mm)
- 291 kg/m³ of crushed stones (2 to 5 mm)
- ratio of water to cementitious binder = 0.405

In order to allow for comparability, the dosage of the plasticizer was adjusted such that the slump of all mixes was about 12 cm after mixing. The method used for determining the slump is analogous to DIN EN 12350-2, with the modification that a mini-slump cone (height: 15 cm, bottom width: 10 cm, top width: 5 cm) was used instead of a conventional Abrams cone. 2 L of the aqueous construction composition were filled into the mini-slump cone. The cone was filled completely immediately after mixing. Afterwards, the cone was placed on a flat surface, and lifted, and the slump of the mix was measured.

The adjusted mortar mixes were each filled into mortar steel prisms (16/4/4 cm). After 3 h at a temperature of 23 ± 2 ° C and a relative humidity of 65%, a hardened mortar prism was obtained. The hardened mortar prism was demolded and compressive strength was measured according to DIN EN 196-1.

The ingredients comprised in the construction compositions were mixed in a Hobbart mixer to prepare the construction composition, i.e. in freshly mixed form. Crushed stones (2 to 5 mm) were dried in an oven at 70 ° C for 50 h. Sand (0 to 4 mm) was dried for 68 h at 140 ° C. Afterwards, the crushed stones and the sand were stored at 20 ° C for at least 2 d at a relative humidity of 65%. Crushed stones, sands and cement were added into a 5 L Hobbart mixer with 80% of the amount of water. The mixture was stirred for 2 min at level 1 (107 rpm). Then, the plasticizer was added with the remaining 20% of water. The mixture was further stirred for 2 min at level2 (198 rpm) to obtain an aqueous, freshly mixed construction composition.

In order to evaluate the fluidity of the construction composition, the slump value of the construction composition was determined 4, 15, 30, 60, and 90 min after mixing in accordance with the above method.

The naphthalenesulfonic acid polycondensates i) of table 1, number 5 was selected for further investigation and is referred to as "PEG-BNS" in the following.

The results from table 3 show that mixtures of Na-BNS and phosphorylated polycondensates or PCEs (comparative examples 19*, 21*, 23*, 25*) show increased viscosity. The inventive mixtures of PEG-BNS and phosphorylated polycondensates or PCEs retain a favorable low viscosity (inventive examples 20, 22, 24, 26). A comparison between examples 19* and 20, examples 21* and 22, examples 23* and 24, examples 25* and 26 reveals that the inventive mixtures have a higher dosage efficiency, sufficient open time as indicated by the slump values after 60 and 90 min and yield higher compressive strengths.

The results from table 4 show that the inventive mixtures (inventive examples 28 to 36) of PEG-BNS and PCEs exhibit a favorably low viscosity whereas the mixture of Na-BNS and PCE (comparative example 27*) shows higher viscosity.

**Table 3: Construction compositions.**

| # | plasticizer | solids content ^{[1]} [%] | viscosity ^{[2]} [mPa·s] | active dosage ^{[3]} [%] | slump 4 min [cm] | slump 15 min [cm] | slump 30 min [cm] | slump 60 min [cm] | slump 90 min [cm] | compressive strength after 24 h [MPa] |
|---|---|---|---|---|---|---|---|---|---|---|
| 13* | Na-BNS ^{[4]} | -- | -- | 0.55 | 11.5 | 9.0 | 7.2 | 5.4 | - | 10.8 |
| 14* | PEG-BNS ^{[5]} | - | - | 0.60 | 11.5 | 11.8 | 11.2 | 9.5 | 7.6 | 22.3 |
| 15* | Phosphorylated polycondensate ii) ^{[6]} | - | - | 0.17 | 12.4 | 10.6 | 9.0 | 3.7 | - | 26.6 |
| 16* | Polycarboxylate ether iii) ^{[7]} | -- | -- | 0.11 | 11.7 | 9.7 | 6.5 | - | - | 26.7 |
| 17* | Polycarboxylate ether iii) ^{[8]} | -- | - | 0.16 | 12.3 | 11.6 | 10.7 | 8.4 | 4.1 | 27.2 |
| 18* | Polycarboxylate ether iii) ^{[9]} | -- | -- | 0.14 | 12.5 | 10.0 | 5.6 | -- | -- | 28.5 |
| 19* | Na-BNS ^{[4]} + Phosphorylated polycondensate ii) ^{[6]} (1:1) | 35 | 950 | 0.41 | 11.8 | 7.7 | 3.5 | -- | -- | 21.3 |
| 20 | PEG-BNS ^{[5]} + Phosphorylated polycondensate ii) ^{[6]} (1:1) | 35 | 500 | 0.34 | 12.4 | 9.2 | 5.8 | 2.4 | - | 25.3 |
| 21* | Na-BNS ^{[4]} + Polycarboxylate ether iii) ^{[7]} (1:1) | 40 | 2200 | 0.30 | 11.2 | 8.3 | 6.2 | 4.9 | - | 21.2 |
| 22 | PEG-BNS ^{[5]} + Polycarboxylate ether iii) ^{[7]} (1:1) | 40 | 850 | 0.25 | 11.5 | 9.9 | 7.8 | 4.2 | - | 25.0 |
| 23* | Na-BNS ^{[4]} + Polycarboxylate ether iii) ^{[8]} (1:1) | 40 | 1350 | 0.40 | 12.6 | 8.5 | 7.1 | 2.5 | - | 22.1 |

| | | | | | | | | | | |
|---|---|---|---|---|---|---|---|---|---|---|
| [1] Solids content of the plasticizer formulation. [2] Brookfield viscosity of the construction composition determined at room temperature (spindle RV03, rheometer DV-III Ultra, 12 rpm, determined after 5 min). [3] Dosage of formulation as active polymer, relative to the amount of cement. [4] Master Rheobuild 1000 (available from Master Builders Solutions Deutschland GmbH). [5] Naphthalenesulfonic acid polycondensate i) of table 1, example 5. [6] Phosphorylated polycondensate ii) having side chains of about 5000 g/mol and a charge density of about 1.5 meq/g (produced according to WO 2010/040612 A1). [7] Polycarboxylate ether iii) having side chains of about 3000 g/mol and a charge density of about 0.8 meq/g (produced according to WO 2009/115371 and WO 2010/066470). [8] Polycarboxylate ether iii) having side chains of about 2000 g/mol and a charge density of about 1.0 meq/g (produced according to WO 2009/115371 and WO 2010/066470). [9] Polycarboxylate ether iii) having side chains of about 6000 g/mol and a charge density of about 0.8 meq/g (produced according to WO 2009/115371 and WO 2010/066470). * comparative example. | | | | | | | | | | |

**Table 4: Further construction compositions.**

| # | plasticizer | PEG-BNS of table 1, example | solids content ^{[1]} [%] | viscosity ^{[2]} [mPa·s] |
|---|---|---|---|---|
| 27* | Na-BNS ^{[3]} + Polycarboxylate ether iii) ^{[4]} (1:1) | --- | 40 | 4100 |
| 28 | PEG-BNS + Polycarboxylate ether iii) ^{[4]} (1:1) | 1 | 40 | 2200 |
| 29 | PEG-BNS + Polycarboxylate ether iii) ^{[4]} (1:1) | 2 | 40 | 1750 |
| 30 | PEG-BNS + Polycarboxylate ether iii) ^{[4]} (1:1) | 3 | 40 | 1050 |
| 31 | PEG-BNS + Polycarboxylate ether iii) ^{[4]} (1:1) | 4 | 40 | 2250 |
| 32 | PEG-BNS + Polycarboxylate ether iii) ^{[4]} (1:1) | 5 | 40 | 1300 |
| 33 | PEG-BNS + Polycarboxylate ether iii) ^{[4]} (1:1) | 6 | 40 | 550 |
| 34 | PEG-BNS + Polycarboxylate ether iii) ^{[4]} (1:1) | 7 | 40 | 1800 |
| 35 | PEG-BNS + Polycarboxylate ether iii) ^{[4]} (1:1) | 8 | 40 | 750 |
| 36 | PEG-BNS + Polycarboxylate ether iii) ^{[4]} (1:1) | 9 | 40 | 350 |

| | | | | |
|---|---|---|---|---|
| [1] Solids content of the plasticizer formulation. [2] Brookfield viscosity of the construction composition determined at room temperature (spindle RV02, rheometer DV-III Ultra, 10 rpm, determined after 5 min). [3] Master Rheobuild 1000 (available from Master Builders Solutions Deutschland GmbH). [4] Polycarboxylate ether iii) having side chains of about 6000 g/mol and a charge density of about 0.8 meq/g (produced according to WO 2009/115371 and WO 2010/066470). * comparative example. | | | | |

## Claims

1. A cement dispersant comprising component i) and at least one of components ii) and iii):
i) a naphthalenesulfonic acid polycondensate being obtainable by a condensation reaction of
i-1) a naphthalenesulfonic acid,
i-2) an alkoxylated hydroxyaryl compound having a polyoxyalkylene chain with 3 to 130 oxyalkylene units, and
i-3) formaldehyde,
in a weight ratio of i-1) : i-2) of 95 : 5 to 60 : 40, preferably 85 : 15 to 60 : 40, more preferably 75 : 25 to 60 : 40,
ii) a phosphorylated polycondensate being obtainable by a condensation reaction of
ii-1) an aromatic compound having a phosphate moiety,
ii-2) an alkoxylated hydroxyaryl compound having a polyoxyalkylene chain with 3 to 130 oxyalkylene units, and
ii-3) formaldehyde,
in a weight ratio of ii-1) : ii-2) of 2 : 98 to 40 : 60, preferably 5 : 95 to 30 : 70, more preferably 10 : 90 to 20 : 80,
iii) a polycarboxylate ether having a carbon-chain backbone with anionic and/or anionogenic groups and polyoxyalkylene side chains having an average of 3 to 130 oxyalkylene units.

2. The cement dispersant according to claim 1, wherein the polyoxyalkylene units comprise at least 60 mol-%, preferably at least 85 mol-%, more preferably at least 95 mol-% of oxyethylene units.

3. The cement dispersant according to claim 1 or 2, wherein the hydroxyaryl compound is selected from phenols and naphthols.

4. The cement dispersant according to any one of the preceding claims, wherein the alkoxylated hydroxyaryl compound i-2) is an ethoxylated phenol or an ethoxylated naphthol.

5. The cement dispersant according to any one of the preceding claims, wherein the components ii) and/or iii) have a charge density of 0.5 to 2.7 meq/g, preferably 0.7 to 2.5 meq/g.

6. The cement dispersant according to any one of the preceding claims, wherein the weight ratio of component i) to the total amount of components ii) and iii) is in the range of 1 : 99 to 99 : 1, preferably 30 : 70 to 70 : 30.

7. The cement dispersant according to any one of the preceding claims, having a solids content of 10 to 50% by weight, preferably 20 to 40% by weight.

8. A construction composition comprising
a) at least one cementitious binder, and
b) the cement dispersant according to any one of claims 1 to 7.

9. The construction composition according to claim 8, wherein the cementitious binder comprises a cement selected from Portland cement, calcium aluminate cement and sulfoaluminate cement.

10. The construction composition according to claim 9, wherein the cementitious binder additionally comprises a supplementary cementitious material such as latent hydraulic binder.

11. The construction composition according to claim 10, wherein the latent hydraulic binder is blast furnace slag.

12. The construction composition according to any one of claims 8 to 11, comprising, relative to the total amount of the construction composition
- the cementitious binder in an amount of 7 to 15 vol.-%,
- sand in an amount of 25 to 35 vol.-%, and
- coarse aggregates in an amount of 40 to 50 vol.-%.

13. The construction composition according to claim 12, additionally comprising a supplementary cementitious material in an amount, relative to the weight of the cementitious binder, of 5 to 80 wt.-%.

14. The construction composition according to any one of claims 8 to 13, in freshly mixed form, wherein the ratio of water to cementitious binder is in the range of 0.25 to 0.5, preferably 0.40 to 0.45.

## Patentansprüche

1. Zementdispergiermittel umfassend Komponente i) und wenigstens eine der Komponenten ii) und iii):
i) ein Naphthalinsulfonsäure-Polykondensat, das erhältlich ist durch eine Kondensationsreaktion von
i-1) einer Naphthalinsulfonsäure,
i-2) einer alkoxylierten Hydroxyarylverbindung mit einer Polyoxyalkylenkette mit 3 bis 130 Oxyalkyleneinheiten und
i-3) Formaldehyd,
in einem Gewichtsverhältnis von i-1):i-2) von 95: 5 bis 60: 40, vorzugsweise 85: 15 bis 60: 40, bevorzugter 75: 25 bis 60: 40,
ii) ein phosphoryliertes Polykondensat, das erhältlich ist durch eine Kondensationsreaktion von
ii-1) einer aromatischen Verbindung mit einer Phosphateinheit,
ii-2) einer alkoxylierten Hydroxyarylverbindung mit einer Polyoxyalkylenkette mit 3 bis 130 Oxyalkyleneinheiten und
ii-3) Formaldehyd,
in einem Gewichtsverhältnis von ii-1):ii-2) von 2: 98 bis 40: 60, vorzugsweise 5: 95 bis 30: 70, bevorzugter 10: 90 bis 20: 80,
iii) einen Polycarboxylatether mit einem Kohlenstoffkettengerüst mit anionischen und/oder anionogenen Gruppen und Polyoxyalkylen-Seitenketten mit einem Mittelwert von 3 bis 130 Oxyalkyleneinheiten.

2. Zementdispergiermittel nach Anspruch 1, wobei die Polyoxyalkyleneinheiten wenigstens 60 mol-%, vorzugsweise wenigstens 85 mol-%, bevorzugter wenigstens 95 mol-% Oxyethyleneinheiten umfassen.

3. Zementdispergiermittel nach Anspruch 1 oder 2, wobei die Hydroxyarylverbindung ausgewählt ist aus Phenolen und Naphtholen.

4. Zementdispergiermittel nach einem der vorstehenden Ansprüche, wobei die alkoxylierte Hydroxyarylverbindung i-2) ein ethoxyliertes Phenol oder ein ethoxyliertes Naphthol ist.

5. Zementdispergiermittel nach einem der vorstehenden Ansprüche, wobei die Komponenten ii) und/oder iii) eine Ladungsdichte von 0,5 bis 2,7 meq/g, vorzugsweise 0,7 bis 2,5 meq/g, aufweisen.

6. Zementdispergiermittel nach einem der vorstehenden Ansprüche, wobei das Gewichtsverhältnis von Komponente i) zu der Gesamtmenge von Komponenten ii) und iii) in dem Bereich liegt von 1: 99 bis 99: 1, vorzugsweise 30: 70 bis 70: 30.

7. Zementdispergiermittel nach einem der vorstehenden Ansprüche mit einem Feststoffgehalt von 10 bis 50 Gew.-%, vorzugsweise 20 bis 40 Gew.-%.

8. Baustoffzusammensetzung umfassend
a) wenigstens ein zementartiges Bindemittel und
b) das Zementdispergiermittel nach einem der Ansprüche 1 bis 7.

9. Baustoffzusammensetzung nach Anspruch 8, wobei das zementartige Bindemittel einen Zement ausgewählt aus Portlandzement, Calciumaluminatzement und Sulfoaluminatzement umfasst.

10. Baustoffzusammensetzung nach Anspruch 9, wobei das zementartige Bindemittel zusätzlich ein ergänzendes zementartiges Material, wie z.B. latentes hydraulisches Bindemittel, umfasst.

11. Baustoffzusammensetzung nach Anspruch 10, wobei das latente hydraulische Bindemittel Hochofenschlacke ist.

12. Baustoffzusammensetzung nach einem der Ansprüche 8 bis 11, umfassend, bezogen auf die Gesamtmenge der Baustoffzusammensetzung
- das zementartige Bindemittel in einer Menge von 7 bis 15 Vol.-%,
- Sand in einer Menge von 25 bis 35 Vol.-% und
- grobes Aggregat in einer Menge von 40 bis 50 Vol.-%.

13. Baustoffzusammensetzung nach Anspruch 12, zusätzlich umfassend ein ergänzendes zementartiges Material in einer Menge, bezogen auf das Gewicht des zementartigen Bindemittels, von 5 bis 80 Gew.-%.

14. Baustoffzusammensetzung nach einem der Ansprüche 8 bis 13 in frisch gemischter Form, wobei das Verhältnis von Wasser zu zementartigem Bindemittel in dem Bereich von 0,25 bis 0,5, vorzugsweise 0,40 bis 0,45, liegt.

## Revendications

1. Dispersant pour ciment comprenant un composant i) et au moins un des composants ii) et iii) :
i) un polycondensat d'acide naphtalènesulfonique pouvant être obtenu par une réaction de condensation de
i-1) un acide naphtalènesulfonique,
i-2) un composé hydroxyaryle alcoxylé ayant une chaîne polyoxyalkylène avec 3 à 130 motifs oxyalkylène, et
i-3) du formaldéhyde,
en un rapport pondéral i-1) : i-2) de 95 : 5 à 60 : 40, de préférence 85 : 15 à 60 : 40, plus préférablement 75 : 25 à 60 : 40,
ii) un polycondensat phosphorylé pouvant être obtenu par une réaction de condensation de
ii-1) un composé aromatique ayant un groupement phosphate,
ii-2) un composé hydroxyaryle alcoxylé ayant une chaîne polyoxyalkylène avec 3 à 130 motifs oxyalkylène, et
ii-3) du formaldéhyde,
en un rapport pondéral ii-1) : ii-2) de 2 : 98 à 40 : 60, de préférence 5 : 95 à 30 : 70, plus préférablement 10 : 90 à 20 : 80,
iii) un éther de polycarboxylate ayant un squelette de chaîne carbonée comportant des groupes anioniques et/ou anionogènes et des chaînes latérales polyoxyalkylène ayant une moyenne de 3 à 130 motifs oxyalkylène.

2. Dispersant pour ciment selon la revendication 1, dans lequel les motifs polyoxyalkylène comprennent au moins 60 % en moles, de préférence au moins 85 % en moles, plus préférablement au moins 95 % en moles de motifs oxyéthylène.

3. Dispersant pour ciment selon la revendication 1 ou 2, dans lequel le composé hydroxyaryle est choisi parmi les phénols et les naphtols.

4. Dispersant pour ciment selon l'une quelconque des revendications précédentes, dans lequel le composé hydroxyaryle alcoxylé i-2) est un phénol éthoxylé ou un naphtol éthoxylé.

5. Dispersant pour ciment selon l'une quelconque des revendications précédentes, dans lequel les composants ii) et/ou iii) ont une densité de charge de 0,5 à 2,7 méq/g, de préférence de 0,7 à 2,5 méq/g.

6. Dispersant pour ciment selon l'une quelconque des revendications précédentes, dans lequel le rapport pondéral du composant i) sur la quantité totale des composants ii) et iii) est dans la plage de 1 : 99 à 99 : 1, de préférence 30 : 70 à 70 : 30.

7. Dispersant pour ciment selon l'une quelconque des revendications précédentes, ayant une teneur en solides de 10 à 50 % en poids, de préférence de 20 à 40 % en poids.

8. Composition de construction comprenant
a) au moins un liant cimentaire, et
b) le dispersant pour ciment selon l'une quelconque des revendications 1 à 7.

9. Composition de construction selon la revendication 8, dans laquelle le liant cimentaire comprend un ciment choisi parmi le ciment Portland, le ciment d'aluminate de calcium et le ciment de sulfoaluminate.

10. Composition de construction selon la revendication 9, dans laquelle le liant cimentaire comprend en outre un matériau cimentaire supplémentaire tel qu'un liant hydraulique latent.

11. Composition de construction selon la revendication 10, dans laquelle le liant hydraulique latent est un laitier de haut fourneau.

12. Composition de construction selon l'une quelconque des revendications 8 à 11, comprenant, par rapport à la quantité totale de la composition de construction
- le liant cimentaire en une quantité de 7 à 15 % en volume,
- du sable en une quantité de 25 à 35 % en volume, et
- des agrégats grossiers en une quantité de 40 à 50 % en volume.

13. Composition de construction selon la revendication 12, comprenant en outre un matériau cimentaire supplémentaire en une quantité, par rapport au poids du liant cimentaire, de 5 à 80 % en poids.

14. Composition de construction selon l'une quelconque des revendications 8 à 13, sous forme fraîchement mélangée, dans laquelle le rapport d'eau sur liant cimentaire est dans la plage de 0,25 à 0,5, de préférence de 0,40 à 0,45.
